# DEMANDE DE BREVET EUROPEEN

(11) **EP 1 892 141 A1**
(43) Date de publication de la demande: **27.02.2008**
(21) Numéro de dépôt: 07023959.5
(22) Date de dépôt: 18.07.2005
(51) Int. Cl.: B60M 3/00

(54) **Système et sous-station d' alimentation électrique d' un réseau de traction**

(30) Priorité: 21.07.2004 FR 0408083
(62) Demande divisionnaire de: 05291533.7
(71) Demandeur: Alstom Transport S.A., 92300 Levallois-Perret (FR)
(72) Inventeur: Cornic, Daniel, 78112 Fourqueux (FR); Moreau, Patrice, 92170 Vanves (FR)
(74) Mandataire: Habasque, Etienne J. Jean-François

(57) **Abrégé**

Ce système d'alimentation d'un réseau de traction d'une voie ferrée comporte :
- plusieurs sous-stations équipées chacune d'un redresseur de tension alternative,
- au moins un poste de transformation d'une haute tension alternative en une basse tension alternative équipé d'une sortie pour la basse tension alternative,
- un superviseur apte à piloter une modification de la tension continue redressée délivrée par une sous-station au réseau de traction en fonction d'une information sur la distance séparant la sous-station d'un véhicule ferroviaire.

## Description

L'invention concerne un système et une sous-station d'alimentation électrique d'un réseau de traction.

Des systèmes d'alimentation connus comportent :
- plusieurs sous-stations d'alimentation électrique, équipées chacune d'un redresseur de tension alternative, d'une entrée propre à recevoir la tension alternative à redresser, et d'une sortie pour la tension alternative redressée raccordée au réseau de traction, ces sous-stations étant réparties à différent endroits le long de la voie ferrée, et
- au moins un poste de transformation d'une haute tension alternative en une basse tension alternative équipé d'une entrée pour la haute tension alternative et d'une sortie pour la basse tension alternative.

Dans les systèmes connus, un poste de transformation haute tension/basse tension est intégré dans chaque sous-station et l'entrée de tension alternative de chaque sous-station est directement raccordée à un réseau de distribution haute tension.

Bien que fonctionnant de façon satisfaisante, ces systèmes connus d'alimentation sont coûteux, espacés et puissants pour compenser les chutes de tension.

L'invention vise à remédier à cet inconvénient en proposant un système d'alimentation d'un réseau de traction d'une voie ferrée moins coûteux.

L'invention a donc pour objet un système d'alimentation selon la revendication 1.

Les modes de réalisation de ce système d'alimentation sont décrits dans les revendications dépendantes.

L'invention a également pour objet une sous-station apte à être utilisée dans le système d'alimentation.

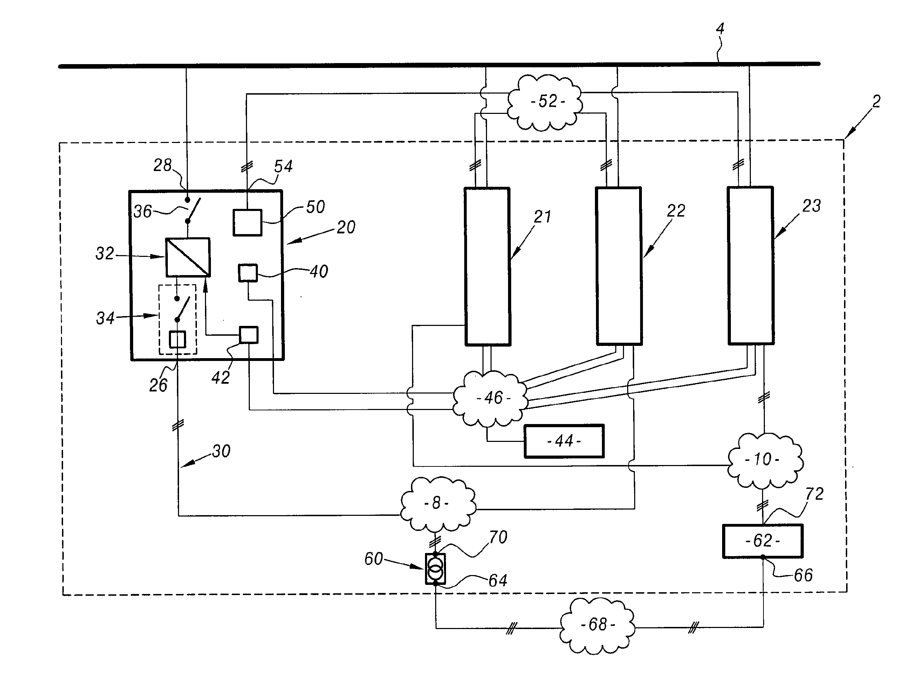

L'invention sera mieux comprise à la lecture de la description qui va suivre, donnée uniquement à titre d'exemple et faite en se référant au dessin, sur lequel la figure 1 est une illustration schématique de l'architecture d'un système d'alimentation d'un réseau de traction d'une voie ferrée.

La figure 1 représente un système, désigné par la référence générale 2, d'alimentation d'un réseau 4 de traction d'une voie ferrée. Le réseau 4 est par exemple, une caténaire sur lequel un pantographe d'un train ou d'un véhicule ferroviaire vient frotter ou un troisième rail placé au sol sur lequel un balai d'un train vient frotter. Le réseau 4 peut également être formé de points d'alimentation discontinus, connus sous les termes de « postes de biberonnage », disposés dans des stations de voyageurs et permettant la recharge ponctuelle en énergie de moyens de stockage embarqués dans un train. Le train présente alors une autonomie partielle sans ligne aérienne. Un réseau 4 comportant des postes de biberonnage est décrit dans la demande de brevet FR 2 782 680. Le réseau 4 sert à alimenter un train en tension continue.

Le système 2 comporte des sous-stations d'alimentation du réseau 4 en tension continue et deux réseaux 8 et 10 de distribution de tension alternative auquel sont raccordées alternativement les sous-stations.

Les sous-stations sont réparties le long de la voie ferrée et séparées les unes des autres par des distances d'espacement comprises, par exemple, entre 400 à 1 000 mètres. Le fait de choisir une distance d'espacement plus petite que celle des systèmes classiques permet de limiter les pertes par effet joule dans le réseau 4 ainsi que les chutes de tension entre les points de raccordement de deux sous-stations. Ici, pour simplifier la figure 1, seule quatre sous-stations 20 à 23 ont été représentées. Ces sous-stations sont, par exemple, identiques les unes aux autres. Par conséquent, seule la sous-station 20 sera décrite ici en détail.

La sous-station 20 comporte une entrée 26 de basse tension alternative à redresser et une sortie 28 de tension continue redressée.

Par basse tension on désigne ici une tension inférieure à 1 000 Vac et plus précisément par basse tension de catégorie B ou BTB une tension comprise entre 500 et 1000 Vac.

Ici, l'entrée 26 est raccordée au réseau 8 qui est un réseau de distribution de basse tension alternative triphasée de catégorie B, par l'intermédiaire d'une liaison électrique 30. Les trois traits obliques sur la liaison 30 indiquent que cette liaison est formée de trois conducteurs électriques comme requis pour transporter une tension triphasée.

Pour redresser la tension BTB, la sous-station comporte un redresseur commandé 32 de tension triphasée dont l'entrée est raccordée à l'entrée 26 par l'intermédiaire d'un jeu 34 de trois fusibles.

Une sortie de tension continue redressée du redresseur 32 est raccordée à la sortie 28 par l'intermédiaire d'un sectionneur 36. La tension continue redressée est comprise entre 500 volts et 900 volts et de préférence voisine de 750 Vdc.

Le sectionneur 36 permet d'isoler électriquement la sous-station 20 du réseau 4 en cas de défaillance de celle-ci ou lors d'opérations de maintenance.

Ici, le redresseur 32 est un pont redresseur commandé de puissance réalisé à partir d'interrupteurs commandables tels que, par exemple, des thyristors ou des transistors IGBT (Insulated Gate Bipopular Transistor). Un tel redresseur commandable est apte à interrompre la distribution d'énergie électrique au réseau 4 en réponse à une commande d'interruption ou en réponse à la détection d'un défaut. Ce redresseur 32 a également une charge réglable en tension et/ou en courant. A cet effet, la sous-station 20 comporte un ensemble 40 de capteurs propres à mesurer la charge du redresseur 32 en mesurant la tension et/ou le courant continu redressé délivré au réseau 4. Elle comporte aussi une unité 42 de pilotage du redresseur 32. Les capteurs et l'unité 42 sont raccordés à un superviseur 44 distant par l'intermédiaire d'un réseau 46 de transmission d'informations. Le réseau 46 est, par exemple, un réseau en fibres optiques.

Ici, le superviseur 44 est apte à piloter à distance la charge de chacune des sous-stations en fonction de la charge mesurée par leurs capteurs respectifs. Le superviseur 44 est également propre à commander à distance l'interruption de la distribution d'énergie électrique au réseau 4 par une sous-station.

Le superviseur 44 est aussi capable de commander une baisse ou une augmentation de la tension continue redressée délivrée au réseau 4 par une sous-station en fonction d'une information sur la distance séparant cette sous-station d'un train. L'information sur la position des trains ainsi que l'information selon laquelle un train accélère ou freine sont acquises, par exemple, par une unité conventionnelle de gestion du trafic ferroviaire. Ces informations sont transmises au superviseur 44. A partir des informations reçues, le superviseur 44 est apte à établir l'information sur la distance séparant un train d'une sous-station.

Le redresseur 32 est plus précisément un redresseur réversible à quatre quadrants de manière à pouvoir récupérer l'énergie de freinage d'un train.

La sous-station 20 comporte également des équipements électriques auxiliaires 50 alimentés en basse tension alternative de catégorie A. Par basse tension alternative de catégories A ou BTA, on désigne ici une tension alternative comprise entre 0 et 500 Vac.

Les équipements auxiliaires 50 sont raccordés à un réseau 52 de distribution BTA par l'intermédiaire d'une entrée 54 de basse tension alternative de catégorie A de la sous-station 20.

Pour se prémunir de défaillance de l'un des réseaux 8, 10 de distribution BTB, les sous-stations du système 2 sont raccordées en alternance soit au réseau 8, soit au réseau 10. Ici, les sous-stations 20 et 22 sont raccordées au réseau 8 tandis que les sous-stations 21 et 23 sont raccordées au réseau 10.

Le système 2 comporte également deux postes de transformation 60, 62 comportant chacun une entrée 64, 66 raccordée à un réseau 68 de distribution de haute tension alternative de catégorie A. Par haute tension alternative de catégorie A ou HTA on désigne ici une tension alternative comprise entre 1000 et 50 000 Vac.

Les postes 60, 62 comportent également chacun une sortie 70, 72 de tension alternative triphasée BTB raccordée respectivement au réseau 8 et au réseau 10. Les postes 60 et 62 sont aptes à transformer la haute tension reçue sur leur entrée respective en une basse tension de catégorie B destinée à être distribuée aux sous-stations par l'intermédiaire des réseaux 8 et 10.

Le fonctionnement du système 2 va maintenant être décrit.

Lors du fonctionnement normal, la haute tension distribuée par le réseau 68 est transformée en basse tension BTB par les postes 60 et 62. Cette basse tension BTB est alors distribuée aux sous-stations par l'intermédiaire des réseaux 8 et 10. La tension BTB reçue par chaque sous-station est redressée par les redresseurs 32 avant d'être utilisée pour alimenter le réseau 4 en tension continue redressée. Ainsi, dans le système 2, puisque la tension à redresser reçue par les sous-stations 2 est déjà une basse tension, il n'est pas nécessaire de prévoir dans chacune de ces sous-tensions un transformateur haute tension/basse tension. L'encombrement et le coût des sous-stations sont donc réduits par rapport aux sous-stations connues. Les sous-stations sont également plus légères.

Ici, le superviseur 44 commande l'ensemble des sous-stations d'alimentation du réseau 4 de manière à ce que les charges de chaque sous-station soient sensiblement égales en courant et tension délivrés. A cet effet, le superviseur utilise les capteurs de charge de chacune des sous-stations. De plus, le superviseur 44 commande une baisse de la tension continue délivrée au réseau 4 par certaines sous-stations en fonction de l'information sur la distance séparant un train de ces sous-stations. Plus précisément, lorsque le train freine, le superviseur 44 commande les sous-stations de manière à ce que la tension continue redressée délivrée par la sous-station la plus proche du train soit inférieure à celle des autres sous-stations. Par exemple, le superviseur 44 commande une baisse de la tension continue délivrée par la sous-station qui est la plus proche du train. Ainsi, la récupération d'énergie par la sous-station la plus proche du train est favorisée. A l'inverse, lorsque le train consomme de l'énergie, le superviseur 44 commande les sous-stations pour que la sous-station la plus proche du train délivre une tension continue redressée supérieure à celle des sous-stations plus éloignées du train. Par exemple, le superviseur 44 commande une augmentation de la tension continue redressée délivrée par la sous-station qui est la plus proche du train. Grâce à ce système, on limite les pertes en lignes. On remarquera que cette façon de minimiser les pertes en ligne est indépendante du fait d'utiliser les réseaux 8 et 10 pour distribuer à chaque sous-station de la basse tension BTB. Par exemple, cette façon de limiter les pertes en ligne peut être mise en oeuvre dans un système d'alimentation où les sous-stations sont équipées d'un redresseur tel que le redresseur 32 et de postes de transformation haute tension/basse tension de manière à pouvoir être raccordées directement au réseau de distribution haute tension 68.

En cas de défaillance, ou lors d'une opération de maintenance, le redresseur 32 est piloté de manière à interrompre très rapidement par commutation statique la distribution d'énergie électrique au réseau 4. Ensuite, pour des raisons de sécurité, le sectionneur 36 est ouvert. Ainsi, dans le système 2, le redresseur 32 remplit des fonctions d'un disjoncteur électromécanique classique ce qui rend inutile la présence d'un tel disjoncteur dans chaque sous-station. Le coût et l'encombrement des sous-stations s'en trouvent donc d'autant réduit.

Le système 2 permet d'optimiser la distribution d'énergie. De plus, dans le cas où le réseau 4 est équipé de points d'alimentation discontinue, il est possible de répartir la charge énergétique entre ces différents points d'alimentation discontinue.

Le système 2 a été décrit ici dans le cas particulier ou il existe une redondance entre les réseaux 8 et 10. Toutefois, en variante, cette redondance est supprimée ou augmentée, c'est-à-dire que le système 2 ne comporte qu'un seul au plus de trois réseaux de distribution BTB pour distribuer la tension alternative à chacune des sous-stations d'alimentation du réseau 4.

Le superviseur 44 a été décrit sous la forme d'un bloc raccordé par l'intermédiaire du réseau 46 aux différentes sous-stations. En variante, le superviseur est formé de modules de supervision indépendants aptes chacun à régler la charge d'un redresseur d'une sous-station en fonction de la charge mesurée dans l'ensemble des sous-stations du système. Chacun de ces modules de supervision est logé à l'intérieur de la sous-station dont il règle la charge. De manière à pouvoir acquérir les informations sur la charge mesurée par les capteurs présents dans les autres sous-stations, ces modules sont raccordés par un réseau de transmission d'informations auxquels sont raccordés les ensembles 40 de capteurs et le module de supervision et chaque sous-station. Dans cette variante, de préférence, l'unité 42 et le module de supervision sont intégrés.

## Revendications

1. Système d'alimentation d'un réseau de traction d'une voie ferrée, ce système comportant :
- plusieurs sous-stations (20 à 23) d'alimentation électrique, équipées chacune d'un redresseur (32) de tension alternative, d'une entrée (26) propre à recevoir la tension alternative à redresser, et d'une sortie (28) pour la tension continue redressée raccordée au réseau de traction, ces sous-stations étant réparties à différent endroits le long de la voie ferrée, les redresseurs (32) étant des redresseurs commandés réversibles à quatre quadrants, permettant des flux d'énergie bidirectionnels pour récupérer de l'énergie de freinage d'un véhicule ferroviaire,
- au moins un poste (60, 62) de transformation d'une haute tension alternative en une basse tension alternative équipé d'une entrée (64, 66) pour la haute tension alternative et d'une sortie (70, 72) pour la basse tension alternative,
**caractérisé en ce qu'**il comporte un superviseur apte à piloter une modification de la tension continue redressée délivrée par une sous-station au réseau de traction en fonction d'une information sur la distance séparant la sous-station d'un véhicule ferroviaire.

2. Système selon la revendication 1, **caractérisé en ce que** les redresseurs (32) sont aptes à interrompre la distribution d'énergie électrique au réseau de traction en réponse à une commande d'interruption ou en réponse à la détection d'un défaut.

3. Système selon l'une quelconque des revendications précédentes, **caractérisé :**
- **en ce que** chaque sous-station (20 à 23) comporte un redresseur commandé à charge réglable en tension et/ou en courant et au moins un capteur (40) de charge du redresseur, et
- **en ce que** le système comporte un superviseur (44) propre à régler la charge de chaque redresseur en fonction de la charge mesurée par les capteurs.

4. Système selon la revendication 3, **caractérisé en ce que** le superviseur est formé de modules de supervision aptes chacun à régler la charge d'un redresseur d'une sous-station en fonction de la charge mesurée par le ou chaque capteur d'au moins une autre sous-station, chaque module de supervision étant logé dans une sous-station respective.

5. Système selon l'une quelconque des revendications précédentes, **caractérisé en ce que** le système comporte un réseau (8 ou 10) de distribution de la basse tension alternative raccordé entre la sortie dudit au moins un poste de transformation et les entrées de tension alternative de plusieurs sous-stations.

6. Système selon l'une quelconque des revendications précédentes, **caractérisé en ce que** les sous-stations sont espacées les unes des autres le long de la voie ferrée par une distance d'espacement comprise entre 400 et 1000 mètres.

7. Sous-station d'alimentation électrique apte à être utilisée dans un système d'alimentation conforme à l'une quelconque des revendications précédentes, la sous-station étant équipée :
- d'un redresseur (32) de tension alternative, le redresseur (32) étant un redresseur commandé réversible à quatre quadrants, permettant des flux d'énergie bidirectionnels pour récupérer de l'énergie de freinage d'un véhicule ferroviaire,
- d'une entrée (26) propre à recevoir la tension alternative à redresser, et
- d'une sortie (28) pour la tension continue redressée raccordée au réseau de traction,
**caractérisé en ce** la sous-station est apte à modifier la tension continue redressée sous la commande du superviseur distant du système d'alimentation.

8. Sous-station selon la revendication 7, **caractérisée en ce que** le redresseur (32) est apte à interrompre la distribution d'énergie électrique au réseau de traction en réponse à une commande d'interruption ou en réponse à la détection d'un défaut.

9. Sous-station selon la revendication 7 ou 8, **caractérisée en ce que** la sous-station comporte au moins un capteur de la charge du redresseur, et **en ce que** le redresseur est à charge réglable en tension et/ou en courant.

10. Sous-station selon l'une quelconque des revendications 7 à 9, **caractérisée en ce que** l'entrée de tension alternative est uniquement apte à recevoir une basse tension alternative.
